# EUROPEAN PATENT APPLICATION

(11) **EP 4 462 589 A1**
(43) Date of publication of application: **13.11.2024**
(21) Application number: 23762766.6
(22) Date of filing: 20.02.2023
(51) Int. Cl.: H01M 50/691

(54) **AUTOMATIC DRAIN VALVE, BATTERY AND POWER CONSUMING DEVICE**

(30) Priority: 04.03.2022 CN 202220472166 U
(71) Applicant: Contemporary Amperex Technology Co., Limited, Jiaocheng District Ningde Fujian 352100 (CN)
(72) Inventor: ZHONG, Siling, Ningde, Fujian 352100 (CN)
(74) Representative: Holt, Lucy Rose
(86) International application number: PCT/CN2023/077231
(87) International publication number: WO 2023/165365

(57) **Abstract**

Disclosed in the present application are an automatic drain valve, a battery and a power consuming device. The automatic drain valve comprises a valve body and a water-soluble assembly, wherein the valve body is provided with a sealed chamber, and a first opening and a second opening which communicate with the sealed chamber; the valve body penetrates and seals a drain port; the first opening is located on the inner side of the drain port; the second opening is exposed from the drain port; the water-soluble assembly is arranged in the sealed chamber and seals the second opening; and after a water-soluble member in the water-soluble assembly is dissolved in water, the water-soluble assembly opens the second opening. The valve body penetrates and seals the drain port, the first opening, the sealed chamber and the second opening of the valve body cooperate to form a channel for communicating the inside of a case with the outside thereof, and the water-soluble assembly is arranged in the channel and blocks the channel, such that after water/a cooling liquid enters the channel through the first opening and contacts the water-soluble member of the water-soluble assembly, the water-soluble member is dissolved, and the channel is unblocked, thereby enabling the water/the cooling liquid to be discharged through the second opening. Therefore, the use danger of a battery can be reduced.

## Description

This application claims priority to Chinese Patent Application No. 202220472166.3, filed on March 04, 2022 and entitled "AUTOMATIC DRAIN VALVE, BATTERY, AND ELECTRIC APPARATUS", which is incorporated herein by reference in its entirety.

### TECHNICAL FIELD

This application relates to the field of batteries, and in particular, to an automatic drain valve, a battery, and an electric apparatus.

### BACKGROUND

Energy conservation and emission reduction are crucial to the sustainable development of the automobile industry. Electric vehicles, with their advantages in energy conservation and environmental protection, have become an important part of the sustainable development of the automobile industry. For electric vehicles, battery technology is an important factor for their development.

However, at present, the water/cooling liquid cannot be discharged automatically after the water enters the battery or the cooling liquid in the battery leaks, leading to use hazards of the battery.

### Technical problems

This application solves the problem of use hazards of a battery caused by water/a cooling liquid being unable to be discharged automatically.

### TECHNICAL SOLUTION

According to a first aspect, this application provides an automatic drain valve. The automatic drain valve includes a valve body and a water-soluble assembly. The valve body is provided with an enclosed chamber and a first opening and second opening communicating with the enclosed chamber separately, and the valve body passes through a drain outlet and closes the drain outlet, the first opening being located on an inner side of the drain outlet, and the second opening being exposed from the drain outlet; and the water-soluble assembly is disposed in the enclosed chamber, the water-soluble assembly closes the second opening, and the water-soluble assembly opens the second opening after a water-soluble member in the water-soluble assembly is dissolved in water.

In some embodiments, the water-soluble assembly includes a sealing gasket and an elastic member, where the sealing gasket covers the second opening, two ends of the elastic member are connected to an inner wall of the valve body and the sealing gasket respectively, two ends of the water-soluble member abut against the inner wall of the valve body and the sealing gasket respectively, and the elastic member is in a tensile state under the support of the water-soluble member. The sealing gasket, the elastic member, and the water-soluble member can fit together to close the second opening and to open the second opening after the water-soluble member is dissolved. Meanwhile, after the water-soluble member is dissolved, the water-soluble member can be replenished for continued use, thereby prolonging service life of the automatic drain valve.

In some embodiments, the valve body is provided with a guide pipe, where one end of the guide pipe is connected to a position on the inner wall of the valve body corresponding to the second opening, the other end of the guide pipe extends toward the second opening, and the elastic member is disposed in the guide pipe. The elastic member is disposed in the guide pipe, thereby providing protection for the elastic member. For example, this prevents rusting and even elastic failure of the elastic member made of a metal material caused by coming into contact with water/a cooling liquid.

In some embodiments, the water-soluble assembly further includes a support member, where the support member is a flexible member made of a water-absorbing material, the support member is disposed along the circumference of the guide pipe in a circle, the support member abuts against the sealing gasket and an inner wall of the valve body facing the sealing gasket, and the support member is provided with a first through hole; where the water-soluble member is disposed between the support member and the guide pipe. Firstly, the support member is located outside the water-soluble member, such that a small amount of moisture/water/cooling liquid in the box is absorbed by the support member, so as to prevent the small amount of moisture/water/cooling liquid from dissolving the water-soluble member, thereby prolonging the service life of the automatic drain valve. Secondly, after the water/cooling liquid is discharged for a period of time, the support member returns to its original state, causing the sealing gasket to close the second opening, thereby allowing for continued use of the battery in a short period of time.

In some embodiments, the support member includes a first support portion and a second support portion, where the first support portion and the second support portion are both annular, the second support portion passes through the inside of the first support portion, one end of the first support portion is connected to one end of the second support portion, the first support portion and the second support portion are provided with a second through hole and a third through hole respectively, and the water-soluble member is provided between the first support portion and the second support portion as well as between the second support portion and the guide pipe. When a small amount of water/cooling liquid enters the enclosed chamber, the second opening cannot be opened, thereby prolonging the service life of the automatic drain valve.

In some embodiments, the sealing gasket is provided with a protrusion at a side facing the second opening, the protrusion is fitted with a first sealing ring, and the first sealing ring abuts against the inner wall of the valve body; or the sealing gasket is provided with a circle of recesses at a side facing the second opening, the recess is provided with a second sealing ring, and the second sealing ring abuts against the inner wall of the valve body. The first sealing ring and the second sealing ring can ensure sealing of the valve body in a normal state.

In some embodiments, the valve body includes a circle of side plates, a bottom plate, and a top cover, where the bottom plate and the top cover close two openings at two ends of the circle of side plates respectively, the bottom plate, the circle of side plates, and the top cover fit together to define the enclosed chamber, a radial size of the bottom plate is larger than a hole diameter of the drain outlet, a size of an outer contour of the circle of side plates is smaller than or equal to the hole diameter of the drain outlet, the top cover or the circle of side plates is provided with the first opening, and the bottom plate is provided with the second opening. The valve body has a simple structure, making it easy to manufacture.

In some embodiments, the automatic drain valve may further include a third sealing ring, where the third sealing ring is fixed on a side of the bottom plate facing the top cover, the third sealing ring surrounds the circle of side plates in a circle, and the third sealing ring protrudes from a surface of the bottom plate. This can ensure sealing of the automatic drain valve in a normal state.

According to a second aspect, this application provides a battery. The battery includes a box and the automatic drain valve according to any one of the foregoing embodiments, where the box is provided with a drain outlet communicating the inside and outside of the box, the valve body of the automatic drain valve passes through the drain outlet and closes the drain outlet, and the automatic drain valve is fixedly connected to the drain outlet. The automatic drain valve is disposed at the drain outlet on the box of the battery, so as to automatically discharge the water/cooling liquid after the water accidentally enters the box or the cooling liquid in the box leaks, thereby reducing use hazards of the battery.

According to a third aspect, this application provides an electric apparatus. The electric apparatus includes the battery according to any one of the foregoing embodiments. The battery is disposed in the electric apparatus to improve use safety of the battery, thereby improving use safety of the electric apparatus.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### Beneficial effects

In the technical solutions in the embodiments of this application, the valve body of the automatic drain valve passes through the drain outlet provided on the box and closes the drain outlet, the first opening, enclosed chamber, and second opening of the valve body fit together to form a channel communicating the inside and outside of the box, and the water-soluble assembly is disposed in the channel and blocks the channel. After the water/cooling liquid in the box enters the channel via the first opening and comes into contact with the water-soluble member in the water-soluble assembly, the water-soluble member is dissolved and the channel is unblocked, so that the water/cooling liquid can be discharged via the second opening, thereby reducing the use hazards of the battery.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, the same reference signs represent the same components. In the accompanying drawings:
FIG. 1 is a schematic cross-sectional view of an automatic drain valve (Embodiment 1) according to some embodiments of this application;
FIG. 2 is a partial schematic structural diagram of an automatic drain valve according to some embodiments of this application;
FIG. 3 is a partial schematic structural diagram of an automatic drain valve according to some embodiments of this application;
FIG. 4 is a schematic cross-sectional view of a valve body of an automatic drain valve according to some embodiments of this application;
FIG. 5 is a partial diagram of an automatic drain valve assembled on a box according to some embodiments of this application;
FIG. 6 is a schematic exploded view of an automatic drain valve (Embodiment 2) according to some embodiments of this application;
FIG. 7 is a schematic cross-sectional view of the automatic drain valve (Embodiment 2) according to some embodiments of this application;
FIG. 8 is a partial schematic diagram of the automatic drain valve (Embodiment 2) according to some embodiments of this application;
FIG. 9 is a partial schematic diagram of the automatic drain valve (Embodiment 2) according to some embodiments of this application;
FIG. 10 is a schematic diagram of a support member of an automatic drain valve according to some embodiments of this application;
FIG. 11 is a schematic diagram of a water-soluble member of an automatic drain valve according to some embodiments of this application;
FIG. 12 is a schematic structural diagram of a battery according to some embodiments of this application;
FIG. 13 is a schematic structural diagram of a battery assembled with an automatic drain valve according to some embodiments of this application; and
FIG. 14 is a schematic structural diagram of an electric apparatus according to some embodiments of this application.

Reference signs in the specific embodiments are described as follows:
1. automatic drain valve, 11. valve body, 111. enclosed chamber, 112. first opening, 113. second opening, 114. guide pipe, 115. a circle of side plates, 116. bottom plate, 117. top cover, 12. water-soluble assembly, 121. water-soluble member, 122. sealing gasket, 1221. protrusion, 1222. first sealing ring, 123. elastic member, 124. support member, 1241. first support portion, 1242. second support portion, 1243. second through hole, 1244. third through hole, 13. third sealing ring, 10. battery, 2. box, 201. drain outlet, 202. battery cell, and 100. electric apparatus.

### DESCRIPTION OF EMBODIMENTS OF THE PRESENT INVENTION

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application belongs. The terms used herein are merely intended to describe the specific embodiments rather than to limit this application. The terms "include", "have", and any other variations thereof in the specification, claims, and brief description of drawings of this application are intended to cover non-exclusive inclusions.

In the descriptions of the embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the descriptions of the embodiments of this application, "a plurality of' means more than two, unless otherwise specifically defined.

In this specification, reference to "embodiment" means that specific features, structures, or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of A, presence of both A and B, and presence of B. In addition, the character "/" in this specification generally indicates an "or" relationship between the contextually associated objects.

In the descriptions of the embodiments of this application, the term "a plurality of means more than two (inclusive). Similarly, "a plurality of groups" means more than two (inclusive) groups, and "a plurality of pieces" means more than two (inclusive) pieces.

In the descriptions of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships shown in the accompanying drawings. These terms are merely for ease and brevity of the descriptions of the embodiments of this application rather than indicating or implying that the apparatuses or elements mentioned must have specific orientations or must be constructed or manipulated according to specific orientations, and therefore shall not be construed as any limitations on the embodiments of this application.

In the descriptions of the embodiments of this application, unless otherwise specified and defined explicitly, the technical terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this application as appropriate to specific situations.

Currently, from the perspective of market development, application of traction batteries is becoming more extensive. Traction batteries have been widely used in energy storage power supply systems such as hydroelectric power plants, thermal power plants, wind power plants, and solar power plants, and many other fields including electric transportation tools such as electric bicycles, electric motorcycles, and electric vehicles, military equipment, and aerospace. With the continuous expansion of application fields of traction batteries, market demands for traction batteries are also increasing.

The inventor has noticed that water/a cooling liquid cannot be discharged automatically after the water enters a battery or the cooling liquid in the battery leaks, leading to use hazards of the battery. The use hazards may be short circuit of the battery caused by the water/cooling liquid in the battery communicating with a circuit in the battery, may be explosion of the battery, or may be other dangerous situations.

To alleviate the problem that the water/cooling liquid cannot be discharged automatically after the water enters the battery or the cooling liquid in the battery leaks, the applicant has found through research that an automatic drain valve can be disposed at a drain outlet of the battery. After the water enters the battery or the cooling liquid in the battery leaks, the water/cooling liquid can be discharged automatically via the automatic drain valve, thereby improving use safety of the battery.

Based on the foregoing considerations, to alleviate the problem that the water/cooling liquid cannot be discharged automatically after the water enters the battery or the cooling liquid in the battery leaks, the inventor, through in-depth research, has designed an automatic drain valve. The automatic drain valve passes through a drain outlet of the battery and closes the drain outlet. The automatic drain valve is provided with a channel communicating the inside and outside of the battery. The channel is provided with a water-soluble member, and the water-soluble member blocks the channel. When the water/cooling liquid enters the channel and comes into contact with the water-soluble member in the channel, the water-soluble member is dissolved to unblock the channel, so that the water/cooling liquid can be discharged to the outside of the battery via the channel.

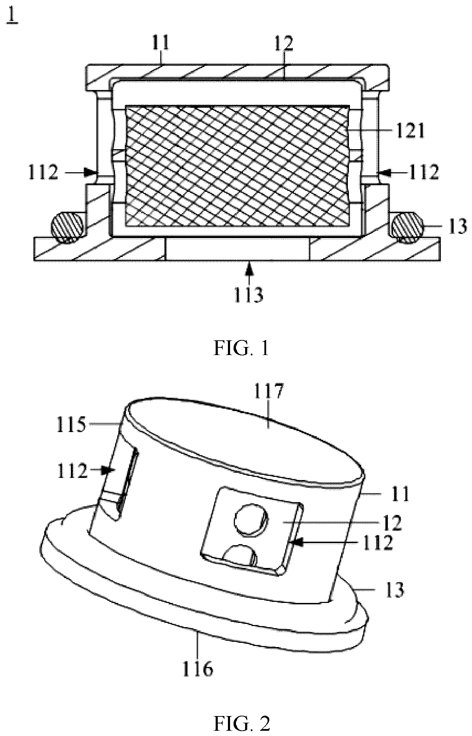

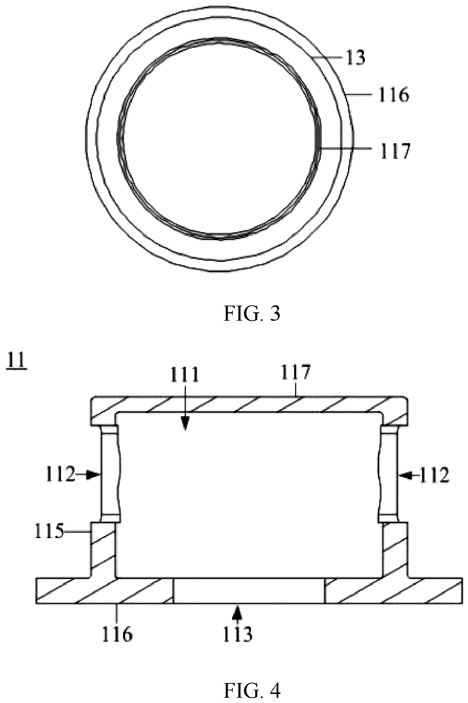

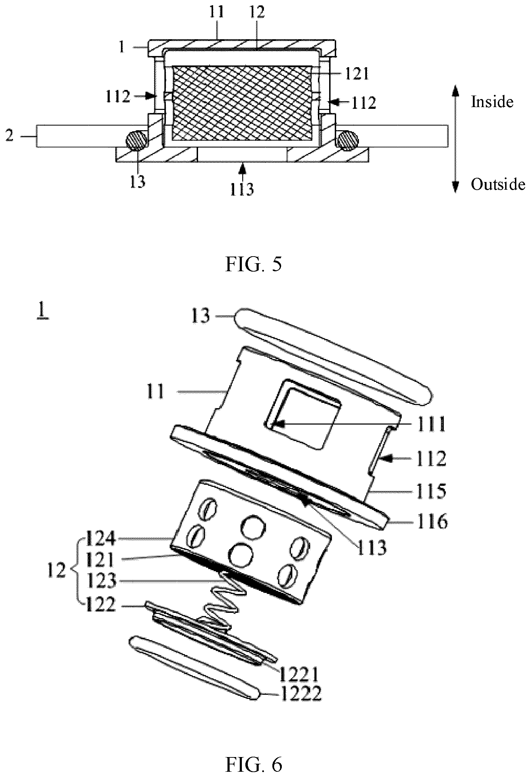

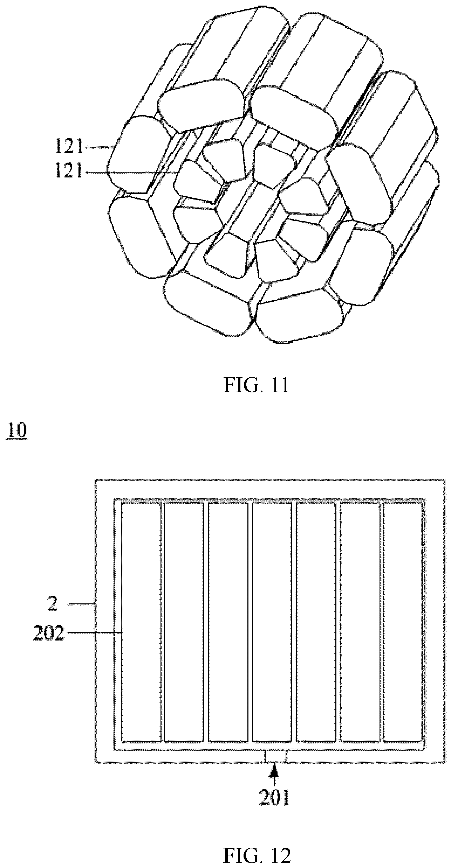

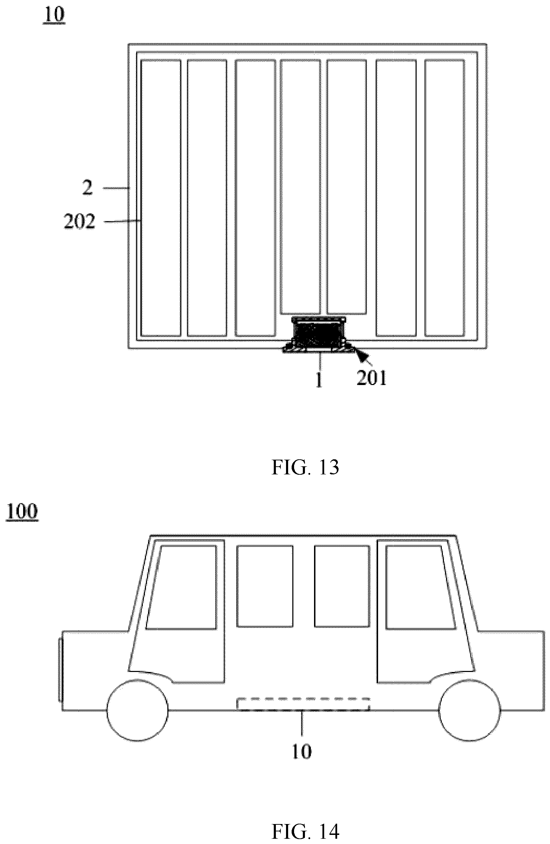

According to some embodiments of this application, refer to FIG. 1, and further refer to FIG. 2 to FIG. 5, FIG. 12, and FIG. 13. FIG. 1 is a schematic cross-sectional view of an automatic drain valve (Embodiment 1) according to some embodiments of this application; FIG. 2 is a partial schematic structural diagram of an automatic drain valve according to some embodiments of this application; FIG. 3 is a partial schematic structural diagram of an automatic drain valve according to some embodiments of this application; FIG. 4 is a schematic cross-sectional view of a valve body of an automatic drain valve according to some embodiments of this application; FIG. 5 is a partial diagram of an automatic drain valve assembled on a box according to some embodiments of this application; FIG. 12 is a schematic structural diagram of a battery according to some embodiments of this application; and FIG. 13 is a schematic structural diagram of a battery assembled with an automatic drain valve according to some embodiments of this application. This application provides an automatic drain valve 1. The automatic drain valve 1 includes a valve body 11 and a water-soluble assembly 12. The valve body 11 is provided with an enclosed chamber 111 and a first opening 112 and second opening 113 communicating with the enclosed chamber 111 separately. The valve body 11 passes through a drain outlet 201 and closes the drain outlet 201. The first opening 112 is located on an inner side of the drain outlet 201, and the second opening 113 is exposed from the drain outlet 201. The water-soluble assembly 12 is disposed in the enclosed chamber 111, the water-soluble assembly 12 closes the second opening 113, and the water-soluble assembly 12 opens the second opening 113 after a water-soluble member 121 in the water-soluble assembly 12 is dissolved in water.

The drain outlet 201 is provided on a protective housing with an accommodating chamber, where the protective housing herein may be the box 2 of the battery 10, a housing of an electronic device, or a housing of another device such as a medical instrument, and the automatic drain valve 1 can be assembled to the drain outlet 201 and close the drain outlet 201. When the protective housing is the box 2 of the battery 10, referring to FIG. 12 and FIG. 13, a battery cell 202 may be provided in the box 2, and functional structures such as a tab and an explosion-proof valve may be further provided on the box 2. When the protective housing is a housing of an electronic device, the accommodating chamber of the protective housing is provided with structures such as a circuit board and an electronic component. When the protective housing is a housing of a medical instrument, the accommodating chamber of the protective housing is provided with structures such as a medical instrument. To describe the technical solutions of this application more clearly, the following embodiments use the protective housing being the box 2 of the battery 10 as an example for description.

The automatic drain valve 1 is fixedly connected to the box 2 after the drain outlet 201 is closed, so as to prevent the automatic drain valve 1 from detaching from the drain outlet 201 by itself, where the fixed connection manner may be screwing, clamping, or the like. For example, referring to FIG. 5, a radial size of the valve body 11 of the automatic drain valve 1 is equal to a hole diameter of the drain outlet 201. After passing through the drain outlet 201, the valve body 11 can close the drain outlet 201. In addition, the valve body 11 and the box 2 at the drain outlet 201 are connected by screws, so as to prevent the automatic drain valve 1 from detaching from the drain outlet 201 by itself.

The valve body 11 is provided with the enclosed chamber 111 and the first opening 112 and second opening 113 communicating with the enclosed chamber 111 separately. When the valve body 11 passes through the drain outlet 201 and closes the drain outlet 201, the first opening 112 is located on the inner side of the drain outlet 201, and the second opening 113 is exposed from the drain outlet 201. In other words, when the valve body 11 passes through the drain outlet 201 and closes the drain outlet 201, the first opening 112, the enclosed chamber 111, and the second opening 113 form a channel communicating the inside and outside of the box 2, and water/a cooling liquid can enter the channel and be discharged to the outside of the box 2. The enclosed chamber 111 may be rectangular, spherical, or of other shapes.

The first opening 112 and the second opening 113 may be circular, square, or of other shapes. The second opening 113 and the first opening 112 may have the same or different shapes. A hole diameter of the second opening 113 may be smaller than that of the first opening 112, equal to that of the first opening 112, or larger than that of the first opening 112. For example, the second opening 113 and the first opening 112 have the same shape, while the hole diameter of the second opening 113 is larger than that of the first opening 112. Then, after entering the enclosed chamber 111 via the first opening 112, the water/cooling liquid in the box 2 can quickly flow out via the second opening 113, thereby preventing accumulation of the water/cooling liquid in the box 2 and even reverse flow into the box 2 due to the fact that the enclosed chamber 111 is full of the water/cooling liquid. The first opening 112 may be provided in plurality. When the first opening 112 is provided in plurality, the plurality of first openings 112 may be uniformly distributed on the valve body 11.

Herein, the first opening 112 may have a certain height from a bottom surface inside the box 2, so as to prevent the water-soluble member 121 from being dissolved due to accumulation of a small amount of condensed water. The water can be discharged only when a certain amount of water accumulates in the box 2. This can prolong service life of the automatic drain valve 1.

The water-soluble assembly 12 is disposed in the enclosed chamber 111, and the water-soluble assembly 12 closes the second opening 113, that is, the water-soluble assembly 12 is located in the channel and blocks the channel. After the water-soluble member 121 in the water-soluble assembly 12 is dissolved in the water/cooling liquid, the water-soluble assembly 12 opens the second opening 113. In other words, after the water-soluble member 121 in the water-soluble assembly 12 is dissolved in the water/cooling liquid, the channel is unblocked, and the water/cooling liquid in the box 2 can be discharged to the outside of the box 2 via the first opening 112, the enclosed chamber 111, and the second opening 113. An initial state of the water-soluble member 121 is solid, and the water-soluble member 121 closes the second opening 113 and is dissolved in the water/cooling liquid. The water-soluble member 121 may be made of polyvinyl alcohol, sodium carboxymethyl cellulose, polyvinylpyrrolidone, or the like.

In these embodiments, the valve body 11 of the automatic drain valve 1 passes through the drain outlet 201 provided on the box 2 and closes the drain outlet 201, the first opening 112, enclosed chamber 111, and second opening 113 of the valve body 11 fit together to form the channel communicating the inside and outside of the box 2, and the water-soluble assembly 12 is disposed in the channel and blocks the channel. After the water/cooling liquid in the box 2 enters the channel via the first opening 112 and comes into contact with the water-soluble member 121 in the water-soluble assembly 12, the water-soluble member 121 is dissolved and the channel is unblocked, so that the water/cooling liquid can be discharged via the second opening 113, thereby reducing the use hazards of the battery 10.

In a specific implementation, firstly, a monitoring apparatus can be provided to monitor in real time whether the water/cooling liquid is discharged from the second opening 113, and when the water/cooling liquid being discharged is monitored, workers can repair or replace the automatic drain valve 1 in a timely manner to ensure continued use of the battery 10; and secondly, after the automatic drain valve 1 is assembled on the box 2, the IPX8 sealing grade requirements are met.

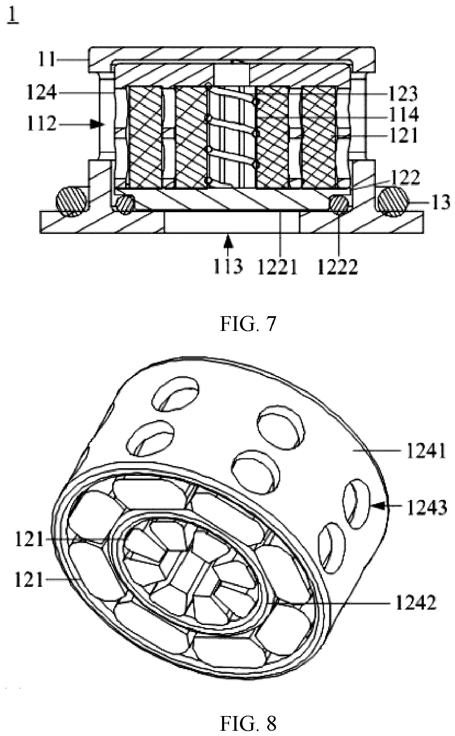

According to some embodiments of this application, referring to FIG. 6 and FIG. 7, the water-soluble assembly 12 includes a sealing gasket 122 and an elastic member 123, where the sealing gasket 122 covers the second opening 113, two ends of the elastic member 123 are connected to an inner wall of the valve body 11 and the sealing gasket 122 respectively, two ends of the water-soluble member 121 abut against the inner wall of the valve body 11 and the sealing gasket 122 respectively, and the elastic member 123 is in a tensile state under the support of the water-soluble member 121.

After covering the second opening 113, the sealing gasket 122 can close the second opening 113, such that the enclosed chamber 111 does not communicate with the second opening 113 due to blocking of the sealing gasket 122. A size of the sealing gasket 122 facing the second opening 113 is larger than the hole diameter of the second opening 113, such that the sealing gasket 122 can cover the second opening 113. The sealing gasket 122 and the second opening 113 may have the same or different shapes. The sealing gasket 122 may be made of an elastic material, for example, a silicone material or a rubber material.

The two ends of the elastic member 123 are connected to the inner wall of the valve body 11 and the sealing gasket 122 respectively, where the inner wall of the valve body 11 and the sealing gasket 122 are opposite each other, allowing the elastic member 123 to stretch or contract in a direction of a connecting line between the inner wall of the valve body 11 and the sealing gasket 122. The elastic member 123 may be a spring or an elastic member made of a material such as silicone or rubber. The elastic member 123 is in the tensile state under the support of the water-soluble member 121, that is, in an initial state, the elastic member 123 has a certain amount of stretching.

The sealing gasket 122 covers the second opening 113, the two ends of the elastic member 123 are connected to the inner wall of the valve body 11 and the sealing gasket 122 respectively, the two ends of the water-soluble member 121 abut against the inner wall of the valve body 11 and the sealing gasket 122 respectively, and the elastic member 123 is in the tensile state under the support of the water-soluble member 121. Therefore, after the water-soluble member 121 providing support is dissolved in the water/cooling liquid, the elastic member 123 resets and contracts, such that the sealing gasket 122 moves away from the second opening 113, so as to open the second opening 113 to discharge the water/cooling liquid in the enclosed chamber 111 from the second opening 113.

In these embodiments, the sealing gasket 122, the elastic member 123, and the water-soluble member 121 can fit together to close the second opening 113 and to open the second opening 113 after the water-soluble member 121 is dissolved. Meanwhile, after the water-soluble member 121 is dissolved, the water-soluble member 121 can be replenished for continued use, thereby prolonging the service life of the automatic drain valve 1.

According to some embodiments of this application, referring to FIG. 7, the valve body 11 is provided with a guide pipe 114, where one end of the guide pipe 114 is connected to a position on the inner wall of the valve body 11 corresponding to the second opening 113, the other end of the guide pipe 114 extends toward the second opening 113, and the elastic member 123 is disposed in the guide pipe 114.

When the elastic member 120 is made of a non-metallic material, a pipe wall of the guide pipe 114 may be provided with a weight-reducing hole communicating inner and outer surfaces of the guide pipe 114, thereby reducing weight of the guide pipe 114 and manufacturing costs of the guide pipe 114. An end of the guide pipe 114 close to the second opening 113 is spaced apart from the sealing gasket 122, so as to provide a space for the sealing gasket 122 to open the second opening 113.

In these embodiments, the elastic member 123 is disposed in the guide pipe 114, thereby providing protection for the elastic member 123. For example, this prevents rusting and even elastic failure of the elastic member 123 made of a metal material caused by coming into contact with the water/cooling liquid.

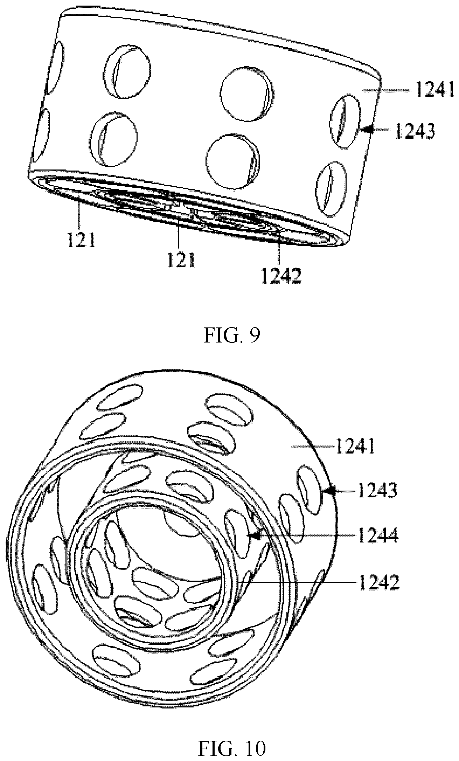

According to some embodiments of this application, referring to FIG. 6 to FIG. 11, the water-soluble assembly 12 further includes a support member 124, where the support member 124 is a flexible member made of a water-absorbing material, the support member 124 is disposed along the circumference of the guide pipe 114 in a circle, the support member 124 abuts against the sealing gasket 122 and an inner wall of the valve body 11 facing the sealing gasket 122, and the support member 124 is provided with a first through hole; where the water-soluble member 121 is disposed between the support member 124 and the guide pipe 114.

The support member 124 is the flexible member made of a water-absorbing material, meaning that the support member 124 can deform after absorbing the water/cooling liquid and can return to its original state after the water/cooling liquid on the support member 124 is lost. For example, the support member 124 is made of a super-absorbent resin material. The support member 124 is disposed along the circumference of the guide pipe 114 in a circle, meaning that the support member 124 is an annular structure, and the support member 124 fits around the outside of the guide pipe 114.

During use, after the water/cooling liquid enters the enclosed chamber 111 from the first opening 112, some of the water/cooling liquid is absorbed by the support member 124, and the support member 124 after absorbing the water/cooling liquid crumples and deforms under the resetting action of the elastic member 123; and some of the water/cooling liquid enters between the support member 124 and the guide pipe 114 via the first through hole on the support member 124 and comes into contact with the water-soluble member 121 between the support member 124 and the guide pipe 114, such that the water-soluble member 121 is dissolved in the water/cooling liquid, causing the sealing gasket 122 to open the second opening 113.

In these embodiments, firstly, the support member 124 is located outside the water-soluble member 121, such that a small amount of moisture/water/cooling liquid in the box 2 is absorbed by the support member 124, so as to prevent the small amount of moisture/water/cooling liquid from dissolving the water-soluble member 121, thereby prolonging the service life of the automatic drain valve 1. Secondly, after the water/cooling liquid is discharged for a period of time, the support member 124 returns to its original state, causing the sealing gasket 122 to close the second opening 113, thereby allowing for continued use of the battery 10 in a short period of time.

Herein, even if the support member 124 returns to its original state to allow for continued use of the battery 10 in a short period of time, the workers should also repair or replace the automatic drain valve 1 in a short period of time to ensure the use safety of the battery 10.

According to some embodiments of this application, referring to FIG. 8 to FIG. 11, the support member 124 includes a first support portion 1241 and a second support portion 1242, where the first support portion 1241 and the second support portion 1242 are both annular, the second support portion 1242 passes through the inside of the first support portion 1241, one end of the first support portion 1241 is connected to one end of the second support portion 1242, the first support portion 1241 and the second support portion 1242 are provided with a second through hole 1243 and a third through hole 1244 respectively, and the water-soluble member 121 is provided between the first support portion 1241 and the second support portion 1242 as well as between the second support portion 1242 and the guide pipe 114.

The first support portion 1241 and the second support portion 1242 are both annular, the second support portion 1242 passes through the inside of the first support portion 1241, and one end of the first support portion 1241 is connected to one end of the second support portion 1242. Herein, when the annular second support portion 1242 is located in the annular first support portion 1241 and one end of the annular first support portion 1241 is connected to one end of the annular second support portion 1242, the first support portion 1241 and the second support portion 1242 define an annular recess. The guide pipe 114 passes through the inside of the second support portion 1242 and has a gap with the second support portion 1242. In addition, the first support portion 1241 and the second support portion 1242 are provided with the second through hole 1243 and the third through hole 1244 respectively, such that the water-soluble member 121 can be disposed in both the annular recess between the first support portion 1241 and the second support portion 1242 and the gap between the second support portion 1242 and the guide pipe 114.

The annular recess between the first support portion 1241 and the second support portion 1242 may be embedded with a plurality of water-soluble members 121, and the plurality of water-soluble members 121 are uniformly disposed around an annular surface of the second support portion 1242 close to the first support portion 1241. Similarly, the gap between the second support portion 1242 and the guide pipe 114 may be provided with a plurality of water-soluble members 121, and the plurality of water-soluble members 121 are uniformly disposed around an annular surface of the guide pipe 114 close to the second support portion 1242.

During use, after a large amount of water/cooling liquid enters the enclosed chamber 111 and sequentially comes into contact with the first support portion 1241, the water-soluble members 121 between the first support portion 1241 and the second support portion 1242, the second support portion 1242, and the water-soluble members 121 between the second support portion 1242 and the guide pipe 114, the first support portion 1241 and the second support portion 1242 crumple and deform under the resetting action of the elastic member 123, and the water-soluble members 121 between the first support portion 1241 and the second support portion 1242 and the water-soluble members 121 between the second support portion 1242 and the guide pipe 114 are dissolved, causing the sealing gasket 122 to open the second opening 113. When a small amount of water/cooling liquid enters the enclosed chamber 111, the second opening 113 cannot be opened.

In these embodiments, when a small amount of water/cooling liquid enters the enclosed chamber 111, the second opening 113 cannot be opened, thereby prolonging the service life of the automatic drain valve 1.

According to some embodiments of this application, referring to FIG. 7, the sealing gasket 122 is provided with a protrusion 1221 at a side facing the second opening 113, the protrusion 1221 is fitted with a first sealing ring 1222, and the first sealing ring 1222 abuts against the inner wall of the valve body 11; or the sealing gasket 122 is provided with a circle of recesses at a side facing the second opening 113, the recess is provided with a second sealing ring, and the second sealing ring abuts against the inner wall of the valve body 11.

The first sealing ring 1222 may be an elastic member made of a rubber material, a silicone material, or the like. The second sealing ring may be an elastic member made of a rubber material, a silicone material, or the like. When the sealing gasket 122 is provided with the circle of recesses at the side facing the second opening 113, the recess is provided with the second sealing ring, and the second sealing ring abuts against the inner wall of the valve body 11, the second sealing ring protrudes from an opening of the circle of recesses and abuts against the valve body 11.

In these embodiments, the first sealing ring 1222 and the second sealing ring can ensure sealing of the valve body 11 in a normal state.

According to some embodiments of this application, referring to FIG. 2 to FIG. 4, the valve body 11 includes a circle of side plates 115, a bottom plate 116, and a top cover 117, where the bottom plate 116 and the top cover 117 close two openings at two ends of the circle of side plates 115 respectively, the bottom plate 116, the circle of side plates 115, and the top cover 117 fit together to define the enclosed chamber 111, a radial size of the bottom plate 116 is larger than a hole diameter of the drain outlet 201, a size of an outer contour of the circle of side plates 115 is smaller than or equal to the hole diameter of the drain outlet 201, the top cover 117 or the circle of side plates 115 is provided with the first opening 112, and the bottom plate 116 is provided with the second opening 113.

The size of the outer contour of the circle of side plates 115 being smaller than or equal to the hole diameter of the drain outlet 201 allows the circle of side plates 115 to pass through the drain outlet 201. The radial size of the bottom plate 116 being larger than the hole diameter of the drain outlet 201 allows the bottom plate 116 to abut against an outer surface of the box 2 and cover the drain outlet 201 after the circle of side plates 115 passes through the drain outlet 201. The top cover 117 or the circle of side plates 115 is provided with the first opening 112. In a specific implementation, because the water/cooling liquid is located at a lower end of the box 2 under the action of gravity, a position of the first opening 112 can be set according to the principle of the shortest distance to the ground. For example, if the automatic drain valve 1 is disposed at the drain outlet 201 at the bottom of the box 2, a distance between the circle of side plates 115 and the ground is smaller than a distance between the top cover 117 and the ground, so the first opening 112 can be set on the circle of side plates 115. In addition, a distance between a lower region of the circle of side plates 115 and the ground is smaller than a distance between an upper region of the circle of side plates 115 and the ground, so the first opening 112 can be set in the lower region of the circle of side plates 115.

In these embodiments, the valve body 11 has a simple structure, making it easy to manufacture.

According to some embodiments of this application, referring to FIG. 1, FIG. 2, and FIG. 5 to FIG. 7, the automatic drain valve 1 may further include a third sealing ring 13, where the third sealing ring 13 is fixed on a side of the bottom plate 116 facing the top cover 117, the third sealing ring 13 surrounds the circle of side plates 115 in a circle, and the third sealing ring 13 protrudes from a surface of the bottom plate 116.

After the automatic drain valve 1 is assembled on the box 2, the third sealing ring 13 is compressed between the outer surface of the box 2 and the bottom plate 116, thereby ensuring sealing of the automatic drain valve 1 in a normal state.

According to some embodiments of this application, referring to FIG. 12 and FIG. 13, this application further provides a battery 10. The battery 10 includes a box 2 and the automatic drain valve 11 according to any one of the foregoing solutions, where the box 2 is provided with a drain outlet 201 communicating the inside and outside of the box 2, the valve body 11 of the automatic drain valve 1 passes through the drain outlet 201 and closes the drain outlet 201, and the automatic drain valve 1 is fixedly connected to the drain outlet 201.

The box 2 is configured to provide an accommodating space for the battery cell 202. The box 2 may be a variety of structures. In some embodiments, the box 2 may include a first portion and a second portion. The first portion and the second portion fit together to jointly define an accommodating space for accommodating the battery cell 202. The second portion may be a hollow structure with an opening at one end, the first portion may be a plate-shaped structure, and the first portion covers the opening side of the second portion so that the first portion and the second portion jointly define the accommodating space. Alternatively, both the first portion and the second portion may be hollow structures with an opening at one side, and the opening side of the first portion is engaged with the opening side of the second portion. Certainly, the box 2 formed by the first portion and the second portion may be of various shapes, for example, cylinder or cuboid.

The battery cell 202 may be a secondary battery or a primary battery, and may be a lithium-sulfur battery, a sodium-ion battery, or a magnesium-ion battery, without being limited thereto. The battery cell 202 may be cylindrical, flat, cuboid, or of other shapes. The battery cell 202 is a smallest element constituting the battery 10. The battery cell 202 may include an end cover, a housing, a cell assembly, and other functional components.

The end cover is a component that covers an opening of the housing to isolate an internal environment of the battery cell 202 from an external environment. Without limitation, shape of the end cover may be adapted to shape of the housing to fit the housing. Optionally, the end cover may be made of a material with specified hardness and strength (for example, aluminum alloy), so that the end cover is less likely to deform when subjected to extrusion and collision, allowing the battery cell 202 to have higher structural strength and enhanced safety performance. Functional components such as an electrode terminal may be provided on the end cover. The electrode terminal may be configured to be electrically connected to the cell assembly in the housing, and the electrode terminal is configured to output or input electrical energy of the battery cell 202. In some embodiments, the end cover may be further provided with a pressure relief mechanism for releasing internal pressure when the internal pressure or temperature of the battery cell 202 reaches a threshold. The end cover may alternatively be made of various materials, such as copper, iron, aluminum, stainless steel, aluminum alloy, and plastic, which are not particularly limited in the embodiments of this application. In some embodiments, an insulator may also be disposed at an inner side of the end cover. The insulator can be configured to isolate electrical connection components in the housing from the end cover, reducing the risk of short circuit. For example, the insulator may be made of plastic, rubber, or the like.

The housing is an assembly configured to form the internal environment of the battery cell 202 together with the end cover, where the formed internal environment may be configured to accommodate the cell assembly, an electrolyte, and other components. The housing and the end cover may be independent components, and an opening may be provided on the housing such that the end cover can cover the opening to form the internal environment of the battery cell. Without limitation, the end cover and the housing may alternatively be integrated. Specifically, the end cover and the housing may form a shared connection surface before other components are disposed inside the housing, and then the housing is covered with the end cover when the inside of the housing needs to be enclosed. The housing may be of various shapes and sizes, such as a cuboid shape, a cylindrical shape, and a hexagonal prism shape. Specifically, the shape of the housing can be determined based on a specific shape and size of the cell assembly. The housing may be made of various materials, such as copper, iron, aluminum, stainless steel, aluminum alloy, and plastic, which are not particularly limited in the embodiments of this application.

The cell assembly is a component in which electrochemical reactions take place in the battery cell. The housing may include one or more cell assemblies. The cell assembly is mainly formed by winding or stacking a positive electrode plate and a negative electrode plate, and a separator is generally disposed between the positive electrode plate and the negative electrode plate. Parts of the positive electrode plate and the negative electrode plate with active substances constitute a body portion of the cell assembly, while parts of the positive electrode plate and the negative electrode plate without active substances separately constitute a tab. A positive tab and a negative tab may both be located at one end of the body portion or be located at two ends of the body portion respectively. During charging and discharging of the battery, a positive electrode active substance and a negative electrode active substance react with the electrolyte, and the tabs are connected to the electrode terminals to form a current loop.

In the box 2 of the battery 10, one or more battery cells 202 may be provided. When the battery cell 202 in the box 2 is provided in plurality, any two of the battery cells 202 may have the same or different shapes and sizes.

When the battery cell 202 in the box 2 of the battery 10 is provided in plurality, the plurality of battery cells 202 may be connected in series, parallel, or series-parallel, where being connected in series-parallel means a combination of series and parallel connections of the plurality of battery cells 202. The plurality of battery cells 202 may be directly connected in series, parallel, or series-parallel, and then an entirety of the plurality of battery cells 202 is accommodated in the box 2; or certainly, the battery 10 may be formed by a plurality of battery cells 202 being connected in series, parallel, or series-parallel first to form a battery module and then a plurality of battery modules being connected in series, parallel, or series-parallel to form an entirety which is accommodated in the box 2. The battery 10 may further include other structures. For example, the battery 10 may further include a busbar configured to implement electrical connection between the plurality of battery cells 202.

The battery 10 may be used without limitation in electric apparatuses such as vehicles, ships, or aircrafts. The battery 10 may be used to constitute a power supply system of that electric apparatus.

In these embodiments, the automatic drain valve 1 is disposed at the drain outlet 201 on the box 2 of the battery 10, so as to automatically discharge the water/cooling liquid after the water accidentally enters the box 2 or the cooling liquid in the box 2 leaks, thereby reducing the use hazards of the battery.

According to some embodiments of this application, referring to FIG. 12 and FIG. 13, the drain 201 is located at the bottom of the box 2 of the battery 10.

According to some embodiments of this application, referring to FIG. 14, this application further provides an electric apparatus 100. The electric apparatus 100 includes the battery 10 according to any one of the foregoing solutions.

The electric apparatus 100 may be but is not limited to a mobile phone, a tablet, a notebook computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

In these embodiments, the battery 10 is disposed in the electric apparatus 100, so as to improve the use safety of the battery 10, thereby improving use safety of the electric apparatus 100.

In some embodiments of this application, referring to FIG. 14, the electric apparatus 100 is a vehicle. The vehicle may be a fossil fuel vehicle, a natural gas vehicle, or a new energy vehicle. The new energy vehicle may be a battery electric vehicle, a hybrid electric vehicle, a range-extended electric vehicle, or the like. The vehicle is provided with the battery 10 inside, where the battery 10 may be disposed at the bottom, front, or rear of the vehicle. The battery 10 may be configured to supply power to the vehicle. For example, the battery 10 may be used as an operational power source for the vehicle. The vehicle may further include a controller and a motor, where the controller is configured to control the battery 10 to supply power to the motor, for example, to satisfy power needs of start, navigation, and driving of the vehicle.

In some embodiments of this application, the battery 10 can be used as not only the operational power source for the vehicle but also a driving power source for the vehicle, replacing or partially replacing fossil fuel or natural gas to provide driving traction for the vehicle.

In a specific embodiment, referring to FIG. 1 to FIG. 13, the automatic drain valve 1 includes:
a valve body 11, where the valve body 11 includes a guide pipe 114, a circle of side plates 115, a bottom plate 116, and a top cover 117, where the bottom plate 116 and the top cover 117 close two openings at two ends of the circle of side plates 115 respectively, the bottom plate 116, the circle of side plates 115, and the top cover 117 fit together to define the enclosed chamber 111, a radial size of the bottom plate 116 is larger than a hole diameter of the drain outlet 201, a size of an outer contour of the circle of side plates 115 is equal to the hole diameter of the drain outlet 201, the circle of side plates 115 is provided with a plurality of first openings 112, and the bottom plate 116 is provided with a second opening 113; and one end of the guide pipe 114 is connected to a position on the top cover 117 corresponding to the second opening 113, and the other end of the guide pipe 114 extends toward the second opening 113;
a water-soluble assembly 12, where the water-soluble assembly 12 includes a water-soluble member 121, a sealing gasket 122, an elastic member 123, and a support member 124, where the support member 124 is a flexible member made of a water-absorbing material; the support member 124 includes a first support portion 1241 and a second support portion 1242, where the first support portion 1241 and the second support portion 1242 are both annular, the second support portion 1242 is fitted between the guide pipe 114 and the first support portion 1241, one end of the first support portion 1241 is connected to one end of the second support portion 1242, the first support portion 1241 and the second support portion 1242 are provided with a second through hole 1243 and a third through hole 1244 respectively, and the water-soluble member 121 is provided between the first support portion 1241 and the second support portion 1242 as well as between the second support portion 1242 and the guide pipe 114; the sealing gasket 122 closes the second opening 113, the elastic member 123 is disposed in the guide pipe 114, and two ends of the elastic member 123 are connected to the top cover 117 and the sealing gasket 122 respectively; two ends of the support member 124 abut against an inner wall of the valve body 11 and the sealing gasket 122 respectively, and the water-soluble member 121 abuts against the sealing gasket 122; and the sealing gasket 122 is provided with a protrusion 1221 at a side facing the second opening 113, the protrusion 1221 is fitted with a first sealing ring 1222, and the first sealing ring 1222 abuts against the inner wall of the valve body 11; and
a third sealing ring 13, where the third sealing ring 13 is fixed on a side of the bottom plate 116 facing the top cover 117, the third sealing ring 13 surrounds the circle of side plates 115 in a circle, and the third sealing ring 13 protrudes from a surface of the bottom plate 116.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. An automatic drain valve, comprising:
a valve body, wherein the valve body is provided with an enclosed chamber and a first opening and second opening communicating with the enclosed chamber separately, and the valve body passes through a drain outlet and closes the drain outlet, the first opening being located on an inner side of the drain outlet, and the second opening being exposed from the drain outlet; and
a water-soluble assembly, wherein the water-soluble assembly is disposed in the enclosed chamber, the water-soluble assembly closes the second opening, and the water-soluble assembly opens the second opening after a water-soluble member in the water-soluble assembly is dissolved in water.

2. The automatic drain valve according to claim 1, wherein
the water-soluble assembly comprises a sealing gasket and an elastic member, wherein the sealing gasket covers the second opening, two ends of the elastic member are connected to an inner wall of the valve body and the sealing gasket respectively, two ends of the water-soluble member abut against the inner wall of the valve body and the sealing gasket respectively, and the elastic member is in a tensile state under the support of the water-soluble member.

3. The automatic drain valve according to claim 2, wherein
the valve body is provided with a guide pipe, wherein one end of the guide pipe is connected to a position on the inner wall of the valve body corresponding to the second opening, the other end of the guide pipe extends toward the second opening, and the elastic member is disposed in the guide pipe.

4. The automatic drain valve according to claim 3, wherein
the water-soluble assembly further comprises a support member, wherein the support member is a flexible member made of a water-absorbing material, the support member is disposed along the circumference of the guide pipe in a circle, the support member abuts against the sealing gasket and an inner wall of the valve body facing the sealing gasket, and the support member is provided with a first through hole; wherein
the water-soluble member is disposed between the support member and the guide pipe.

5. The automatic drain valve according to claim 4, wherein
the support member comprises a first support portion and a second support portion, wherein the first support portion and the second support portion are both annular, the second support portion passes through the inside of the first support portion, one end of the first support portion is connected to one end of the second support portion, the first support portion and the second support portion are provided with a second through hole and a third through hole respectively, and the water-soluble member is provided between the first support portion and the second support portion as well as between the second support portion and the guide pipe.

6. The automatic drain valve according to any one of claims 2 to 5, wherein
the sealing gasket is provided with a protrusion at a side facing the second opening, the protrusion is fitted with a first sealing ring, and the first sealing ring abuts against the inner wall of the valve body; or
the sealing gasket is provided with a circle of recesses at a side facing the second opening, the recess is provided with a second sealing ring, and the second sealing ring abuts against the inner wall of the valve body.

7. The automatic drain valve according to any one of claims 1 to 6, wherein
the valve body comprises a circle of side plates, a bottom plate, and a top cover, wherein the bottom plate and the top cover close two openings at two ends of the circle of side plates respectively, the bottom plate, the circle of side plates, and the top cover fit together to define the enclosed chamber, a radial size of the bottom plate is larger than a hole diameter of the drain outlet, a size of an outer contour of the circle of side plates is smaller than or equal to the hole diameter of the drain outlet, the top cover or the circle of side plates is provided with the first opening, and the bottom plate is provided with the second opening.

8. The automatic drain valve according to claim 7, further comprising:
a third sealing ring, wherein the third sealing ring is fixed on a side of the bottom plate facing the top cover, the third sealing ring surrounds the circle of side plates in a circle, and the third sealing ring protrudes from a surface of the bottom plate.

9. A battery, comprising:
a box, wherein the box is provided with a drain outlet communicating the inside and outside of the box; and
the automatic drain valve according to any one of claims 1 to 8, wherein the valve body of the automatic drain valve passes through the drain outlet and closes the drain outlet, and the automatic drain valve is fixedly connected to the drain outlet.

10. An electric apparatus, comprising:
the battery according to claim 9.
